(19) Europäisches Patentamt
European Patent Office
Office européen des brevets

(11) **EP 3 646 016 B1**

(12) **EUROPÄISCHE PATENTSCHRIFT**

(45) Veröffentlichungstag und Bekanntmachung des Hinweises auf die Patenterteilung:
**15.01.2025 Patentblatt 2025/03**

(21) Anmeldenummer: **18710318.9**

(22) Anmeldetag: **05.02.2018**

(51) Internationale Patentklassifikation (IPC):
**G01N 27/22** (2006.01)

(52) Gemeinsame Patentklassifikation (CPC):
**G01N 27/223; G01K 7/183**

(86) Internationale Anmeldenummer:
**PCT/EP2018/052791**

(87) Internationale Veröffentlichungsnummer:
**WO 2019/001776 (03.01.2019 Gazette 2019/01)**

(54) **SENSORVORRICHTUNG ZUR KAPAZITIVEN FEUCHTEMESSUNG**

SENSOR DEVICE FOR CAPACITIVE MOISTURE MEASUREMENT

DISPOSITIF CAPTEUR POUR LA MESURE CAPACITIVE DE L'HUMIDITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2017 DE 102017210874**

(43) Veröffentlichungstag der Anmeldung:
**06.05.2020 Patentblatt 2020/19**

(73) Patentinhaber: **E+E Elektronik Ges.m.b.H.**
**4209 Engerwitzdorf (AT)**

(72) Erfinder:
• **HAIDER, Albin**
**4211 Alberndorf (AT)**
• **NIESSNER, Georg**
**4223 Katsdorf (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
WO-A1-2010/113711 US-A1- 2013 139 587
US-A1- 2015 047 430 US-B1- 6 483 324

**Beschreibung**

GEBIET DER TECHNIK

Die vorliegende Erfindung betrifft eine Sensorvorrichtung zur Feuchtemessung.

STAND DER TECHNIK

Zur Messung von Feuchte und Temperatur eines Mediums sind Sensorvorrichtungen bekannt, die aus einem Trägersubstrat bestehen, auf dem in Dünn- oder Dickfilmtechnik aufgebrachte Sensorik-Komponenten angeordnet sind. Die beispielsweise in der US 4,277,742 offenbarte Sensorvorrichtung weist ein Trägersubstrat aus einem elektrisch leitfähigen Halbleitermaterial auf, auf dem ein kapazitiver Feuchtesensor angeordnet ist. Der kapazitive Feuchtesensor besteht aus einer Grundelektrode, einer feuchtedurchlässigen Deckelektrode sowie einem zwischen den Elektroden angeordneten feuchteempfindlichen Dielektrikum. Separat vom Feuchtesensor ist in der US 4,277,742 im Ausführungsbeispiel der Figur 7 desweiteren noch ein Temperatursensor in Form einer planaren Leiterbahn auf dem Halbleiter-Trägersubstrat vorgesehen. Nachteilig an der vorgeschlagenen Sensorvorrichtung ist neben dem großen Platzbedarf für den Feuchte- und Temperatursensor insbesondere, dass ein relativ komplexer Schichtaufbau mit entsprechend vielen Prozessschritten bei der Herstellung vorgesehen ist.

Eine Sensorvorrichtung zur kapazitiven Feuchtemessung ist desweiteren aus der DE 10 2006 018 563 A1 bekannt. Im Ausführungsbeispiel gemäß Figur 5A sind auf einem Halbleiter-Trägersubstrat benachbart nebeneinander ein kapazitiver Feuchtesensor und ein Referenzkondensator bzw. eine Referenzkapazität angeordnet. Der Referenzkondensator umfasst als Elektroden eine N-Diffusionsschicht im Halbleiter-Trägersubstrat und eine Polysiliziumschicht, die zwischen den Elektroden angeordnete Siliziumoxidschicht fungiert als Dielektrikum des Referenzkondensators. Nachteilig an dieser Sensorvorrichtung ist zum einen der erhöhte Platzbedarf für den Feuchtesensor und den Referenzkondensator, die nebeneinander angeordnet sind. Zum anderen ist als Halbleiter-Trägersubstrat ein bereits vorprozessierter Wafer mit Zonen unterschiedlicher Dotierung auf der Wafer-Oberfläche vorgesehen, was die Kosten für eine derartige Sensorvorrichtung erhöht.

Ähnliche Vorrichtungen mit benachbart nebeneinander angeordneten Feuchtesensoren und Referenzkapazitäten sind auch aus den Druckschriften US 2013/0139587 A1, US 2015/0047430 A1 und WO 2010/113711 A1 bekannt.

ZUSAMMENFASSUNG DER ERFINDUNG

Der vorliegenden Erfindung liegt die Aufgabe zugrunde, eine Sensorvorrichtung zur Feuchtemessung zu schaffen, die bei geringen Herstellkosten eine noch hinreichende Messgenauigkeit liefert und möglichst kompakt bauend ausgebildet ist.

Diese Aufgabe wird erfindungsgemäß durch eine Sensorvorrichtung mit den Merkmalen des Anspruchs 1 gelöst.

Vorteilhafte Ausführungen der erfindungsgemäßen Sensorvorrichtung ergeben sich aus den Maßnahmen, die in den abhängigen Ansprüchen aufgeführt sind.

Die erfindungsgemäße Sensorvorrichtung zur Feuchtemessung besteht aus einem elektrisch leitfähigen Halbleiter-Trägersubstrat, mit

- einem darauf angeordneten kapazitiven Feuchtesensor, der eine Grundelektrode, eine feuchtedurchlässige Deckelektrode sowie ein zwischen Grund- und Deckelektrode angeordnetes, feuchteempfindliches Dielektrikum umfasst, sowie

- mindestens einer darauf angeordneten Referenzkapazität zur Auswertung des Feuchtesensors.

Die Grundelektrode des kapazitiven Feuchtesensors ist desweiteren Bestandteil der mindestens einen Referenzkapazität. Auf dem Halbleiter-Trägersubstrat ist eine Passivierungsschicht angeordnet, auf der die Grundelektrode aufgebracht ist. Die Referenzkapazität umfasst die Grundelektrode, das Halbleiter-Trägersubstrat sowie die Passivierungsschicht, wobei der Feuchtesensor und die Referenzkapazität übereinander angeordnet sind.

Hierbei kann die Passivierungsschicht aus einem oder mehreren der folgenden Materialien ausgebildet sein:

Siliziumdioxid, Siliziumoxynitrid, Siliziumnitrid

Es ist möglich, dass die Grundelektrode flächig und aus elektrisch leitfähigem Material ausgebildet ist.

Dabei kann die Grundelektrode aus Gold und einer darunter liegenden Haft- und Lötbarkeitsschicht ausgebildet sein.

Desweiteren kann vorgesehen sein, dass die Deckelektrode flächig und aus elektrisch leitfähigem Material ausgebildet ist.

Vorzugsweise ist das Halbleiter-Trägersubstrat aus dotiertem Halbleitermaterial ausgebildet.

Erfindungsgemäß sind auf dem Halbleiter-Trägersubstrat mehrere Kontaktierungsanschlüsse ausgeformt, insbesondere ein Kontaktierungsanschluss für die Deckelektrode, zwei Kontaktierungsanschlüsse für die Grundelektrode sowie ein Kontaktierungsanschluss für das Halbleiter-Trägersubstrat.

Dabei sind die Kontaktierungsanschlüsse vorzugsweise jeweils planar ausgebildet.

Die Kontaktierungsanschlüsse können jeweils einen quadratischen oder runden Querschnitt aufweisen.

Ferner ist möglich, dass die Grundelektrode mehrteilig ausgebildet ist.

In einer Anordnung mit einem Trägersubstrat, das eine Ausnehmung aufweist, kann im Bereich der Ausnehmung eine erfindungsgemäße Sensorvorrichtung angeordnet sein, wobei der Feuchtesensor in Richtung der Ausnehmung orientiert ist.

Vorzugsweise ist dabei auf derjenigen Seite des Trägersubstrats, die abgewandt zur Sensorvorrichtung orientiert ist, die Ausnehmung mit einer feuchtedurchlässigen Membran aus Teflongeflecht abgedeckt.

Ferner kann die Ausnehmung im Trägersubstrat mit einem Beschichtungs-Material gefüllt sein, das einen Gasaustausch zwischen dem Feuchtesensor und der Umgebung ermöglicht, aber Flüssigkeit vom Feuchtesensor fernhält. Die erfindungsgemäße Sensorvorrichtung kann aufgrund des einfachen Aufbaus in nur wenigen Prozessschritten hergestellt werden, d.h. es resultieren besonders geringe Herstellkosten. Hierzu trägt ferner bei, dass die erfindungsgemäße Sensorvorrichtung als passives System ohne integrierte Signalverarbeitungskomponenten ausgebildet ist und daher ein preisgünstiges Halbleiter-Trägersubstrat verwendet werden kann.

Aufgrund der vorgesehenen Übereinander-Anordnung des kapazitiven Feuchtesensors und der Referenzkapazität ist zudem ein besonders platzsparender Aufbau der erfindungsgemäßen Sensorvorrichtung sichergestellt.

Ferner kann die erfindungsgemäße Sensorvorrichtung ohne erforderliches Packaging oder Gehäuse weiterverarbeitet werden, was z.B. Einsatzmöglichkeiten eröffnet, in denen eine gute thermische Ankopplung der Sensorvorrichtung erforderlich ist. Dies kann gewährleistet werden, da ohne Packaging die gute Wärmeleitung des Halbleiter-Trägersubstrats eine effiziente thermische Ankopplung der Sensorvorrichtung in entsprechenden Messumgebungen ermöglicht.

Zur elektrischen Kontaktierung der erfindungsgemäßen Sensorvorrichtung kann diese in einer möglichen Anordnungsvariante einfach auf ein Trägersubstrat in Form einer geeigneten Platine aufgelötet werden. Es entfallen bei einer solchen Anordnung damit die ansonsten erforderlichen Bondverbindungen oder Ball Grid Arrays.

Weitere Einzelheiten und Vorteile der vorliegenden Erfindung seien anhand der nachfolgenden Beschreibung von Ausführungsbeispielen der erfindungsgemäßen Sensorvorrichtung in Verbindung mit den Figuren erläutert.

## KURZE BESCHREIBUNG DER ZEICHNUNGEN

Es zeigt

Figur 1a      eine Schnittansicht zur Erläuterung des prinzipiellen Lagenaufbaus in der erfindungsgemäßen Sensorvorrichtung;

Figur 1b      das zum Lagenaufbau in Figur 1a gehörige, stark vereinfachte elektrische Ersatzschaltbild;

Figur 2      eine perspektivische Ansicht eines Ausführungsbeispiels der erfindungsgemäßen Sensorvorrichtung;

Figur 3      eine Explosionsdarstellung des Ausführungsbeispiels aus Figur 2;

Figur 4a      eine Draufsicht auf das Ausführungsbeispiel der Sensorvorrichtung aus Figur 2;

Figur 4b, 4c      jeweils verschiedene Schnittansichten des Ausführungsbeispiels aus Figur 2;

Figur 5, 6      jeweils Ansichten von Anordnungen mit der erfindungsgemäßen Sensorvorrichtung auf unterschiedlichen Trägerelementen.

## BESCHREIBUNG DER AUSFÜHRUNGSFORMEN

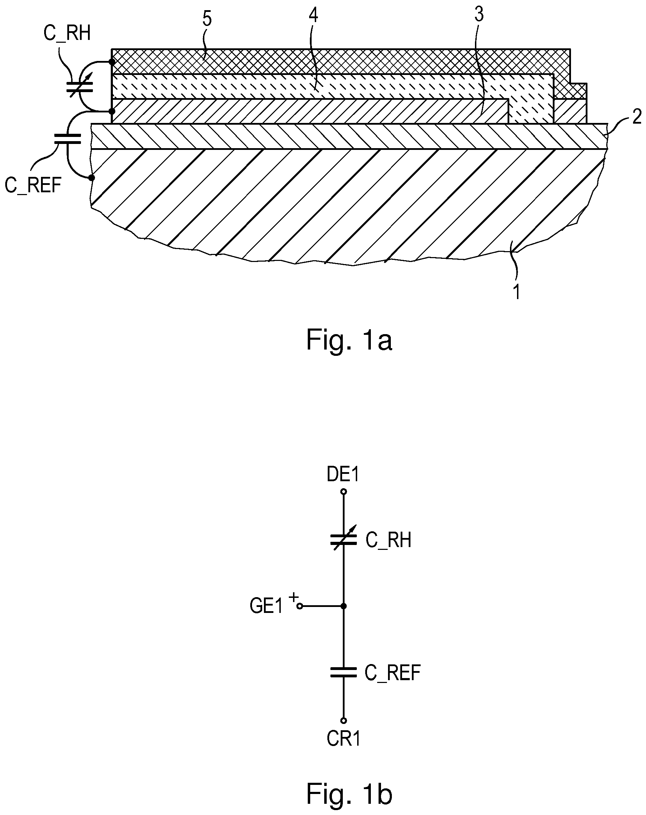

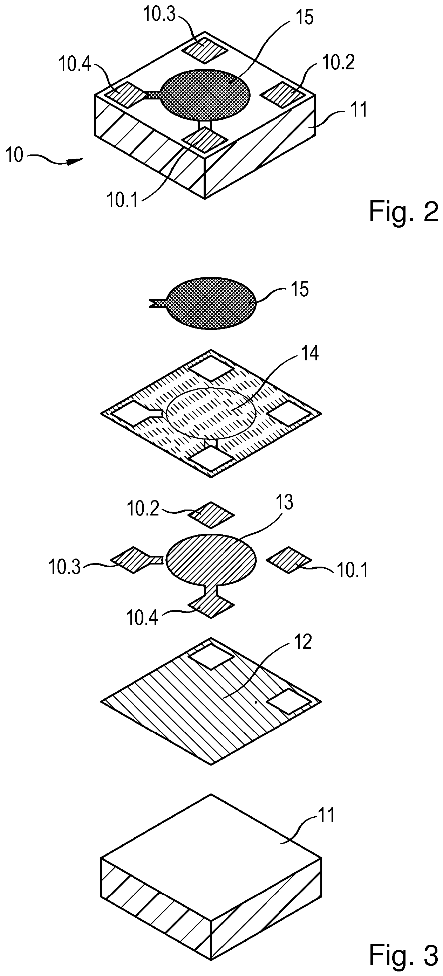

Bevor anhand der Figuren 2 - 6 ein konkretes Ausführungsbeispiel der erfindungsgemäßen Sensorvorrichtung sowie beispielhafte Anordnungen mit einer derartigen Sensoranordnung im Detail erläutert werden, sei zuvor anhand der Figuren 1a und 1b der grundlegende Aufbau der erfindungsgemäßen Vorrichtung beschrieben.

Die erfindungsgemäße Sensorvorrichtung umfasst ein elektrisch leitfähiges Halbleiter-Trägersubstrat 1, auf dem bestimmte Komponenten zur Messung der Feuchte eines umgebenden Mediums in der nachfolgend beschriebenen Art und Weise angeordnet sind. Als leitfähiges Halbleiter-Trägersubstrat 1 ist ein dotiertes Halbleitermaterial, vorzugsweise dotiertes Silizium vorgesehen. Hierzu kann ein entsprechender Silizium-Wafer verwendet werden, aus dem sich dann eine Vielzahl erfindungsgemäßer Sensorvorrichtungen kostengünstig im Mehrfachnutzen fertigen lassen. Da die erfindungsgemäße Sensorvorrichtung als komplett passives System ausgebildet ist, kann auf eine Vorbearbeitung des Halbleiter-Trägersubstrats 1 verzichtet und als geeigneter Silizium-Wafer z.B. ein kostengünstiger 8"-Wafer genutzt werden. Dieser ist nicht über weitere Halbleiter-Fertigungsprozesse vorbearbeitet, um darüber weitere aktive Elektronik-Komponenten darin zu integrieren. Insbesondere ist hierbei keine vorhergehende strukturierte Dotierung des Silizium-Wafers erforderlich. Beispielsweise ist es möglich, einen Wafer zu verwenden, der von der Fa. UniversityWafer, Inc. unter der Bezeichnung "Prime Si + wet SiO2 wafer 8 inch" (Orientation (100); 1-side polished; P-type doped (Boron), 0,05...0,02 OHM cm; 1000nm SiO2 (+/- 5%)) vertrieben wird.

Wie aus Figur 1a ersichtlich, ist auf dem Halbleiter-Trägersubstrat 1 eine elektrisch isolierende Passivierungsschicht 2 angeordnet. Für die Passivierungsschicht können hierbei ein oder mehrere der folgenden Materialen vorgesehen sein: Siliziumdioxid $SiO_x$, Siliziumoxynitrid $SiO_xN_y$, Siliziumnitrid $SiN_x$ (mit x, y: rationale Zahlen). Auf der Passivierungsschicht 2 sind dann übereinander angeordnet die weiteren Lagen bzw. Schichten vorgesehen, welche die erforderliche Feuchtemessungs-Sensorik ausbilden. Es ist dabei möglich, dass der zugekaufte Silizium-Wafer bereits eine derartige Passivierungsschicht 2 aufweist und diese nicht mehr separat bei der Herstellung der erfindungsgemäßen Sensorvorrichtung aufgebracht werden muss.

Zur Feuchtemessung ist ein kapazitiver Feuchtesensor in der erfindungsgemäßen Sensorvorrichtung vorgesehen, der eine Grundelektrode 3, eine feuchtedurchlässige Deckelektrode 5 sowie ein zwischen Grund- und Deckelektrode 3, 5 angeordnetes, feuchteempfindliches Dielektrikum 4 umfasst. Wie aus Figur 1a ersichtlich, ist die Grundelektrode 3, die flächig ausgebildet ist und aus einem elektrisch leitfähigen Material besteht, auf der Passivierungsschicht 2 aufgebracht. Die Grundelektrode 3 kann z.B. aus Gold und einer darunter liegenden Haft- und Lötbarkeitsschicht aus Nickel Ni oder Nickel-Chrom NiCr bestehen. Als oberhalb der Grundelektrode 3 angeordnetes Dielektrikum 4 wird vorzugsweise ein Polymerwie z.B. Polyimid verwendet, dessen Kapazität sich in definierter Art und Weise feuchteabhängig ändert. Im Folgenden sei diesbezüglich die Rede von einer feuchteabhängigen Messkapazität C_RH. Die feuchtedurchlässige Deckelektrode 5 ist im vorliegenden Ausführungsbeispiel ebenfalls flächig ausgebildet und besteht aus einem elektrisch leitfähigen Material, beispielsweise Chrom. Die Feuchtedurchlässigkeit der Deckelektrode 5 kann durch eine geeignete poröse oder rissige Struktur derselbigen gewährleistet werden. Über diese Struktur gelangt das umgebende Medium, dessen Feuchtegehalt zu messen ist, in Kontakt mit dem feuchteempfindlichen Dielektrikum 4. Alternativ zu einer flächigen, rissigen Deckelektrode kann auch vorgesehen werden, die Deckelektrode strukturiert in Form von mäanderförmigen Bahnen ausgebildet werden; ferner können auch löchrige Strukturen als Deckelektrode fungieren.

Erfindungsgemäß wird die Grundelektrode 3 in der Sensorvorrichtung nicht nur als Teil des kapazitiven Feuchtesensors genutzt, sondern auch als Bestandteil mindestens einer Referenzkapazität C_REF. Eine derartige Referenzkapazität C_REF wird zusammen mit der Messkapazität C_RH in bekannter Art und Weise zur Feuchtebestimmung im umgebenden Medium genutzt. Hinsichtlich eines geeigneten Verfahrens zur Feuchtebestimmung mit Hilfe einer Referenzkapazität C_REF sei beispielsweise auf die EP 1 574 847 B1 der Anmelderin verwiesen, auf deren Inhalt hiermit ausdrücklich Bezug genommen wird. Die Referenzkapazität C_REF wird wie aus Figur 1a ersichtlich in der erfindungsgemäßen Sensorvorrichtung aus der besagten Grundelektrode 3, dem Halbleiter-Trägersubstrat 1 und der dazwischen angeordneten Passivierungsschicht 2 ausgebildet, die hier als Dielektrikum fungiert. Die Grundelektrode 3 des Feuchtesensors bildet damit zusätzlich auch eine der beiden Elektroden der Referenzkapazität C_REF; die zweite Elektrode der Referenzkapazität C_REF wird durch das Halbleiter-Trägersubstrat 1 ausgebildet. Es ist somit nicht mehr erforderlich, eine separate Referenzkapazität C_REF zur Feuchtebestimmung in der Sensorvorrichtung auszubilden, vielmehr wird die grundsätzlich vorhandene, üblicherweise unerwünschte Kapazität zwischen der Grundelektrode 3 und dem Halbleiter-Trägersubstrat 1 als Referenzkapazität C_REF genutzt.

Die zugehörigen Kontaktierungsanschlüsse, über die die erfindungsgemäße Sensorvorrichtung mit einer - nicht in den Figuren gezeigten - Feuchtemessungs-Schaltungsanordnung verbunden wird, sind in Figur 1b mit DE1, GE1 und CR1 bezeichnet. Hierbei dient der Kontaktierungsanschluss DE1 zum Kontaktieren der Deckelektrode 5, der Kontaktierungsanschluss GE1 zum Kontaktieren der Grundelektrode 3 und der Kontaktierungsanschluss CR1 zum Kontaktieren des Halbleiter-Trägersubstrats 1.

Im Zusammenhang mit dem vereinfachten elektrischen Ersatzschaltbild der erfindungsgemäßen Sensorvorrichtung in Figur 1b sei erwähnt, dass zur korrekten Darstellung der realen Verhältnisse noch weitere Effekte berücksichtigt werden müssten, beispielsweise sich ausbildende parasitäre Kapazitäten zwischen unterschiedlichen Komponenten. Angesichts derartiger Effekte erweist sich als vorteilhaft, wenn der elektrische Widerstand des Halbleiter-Trägersubstrats 1, der im Fall von Silizium einer großen Schwankungsbreite unterliegt (1 ... 10$\Omega$ • cm), in der Größenordnung des Serienwiderstands der Messkapazität C_RH liegt und damit auch dieser Parameter für die Referenzkapazität C_REF ähnlich wie bei der Messkapazität C_RH ist.

Die erfindungsgemäß vorgesehene Doppelnutzung der Grundelektrode 3 für die Messkapazität C_RH als auch für die mindestens eine Referenzkapazität C_REF vereinfacht die Herstellung der erfindungsgemäßen Sensorvorrichtung erheblich. Es sind insgesamt deutlich weniger Prozessschritte zum Aufbringen funktionsrelevanter Schichten erforderlich. Die Herstellungskosten der erfindungsgemäßen Sensorvorrichtung können damit reduziert werden.

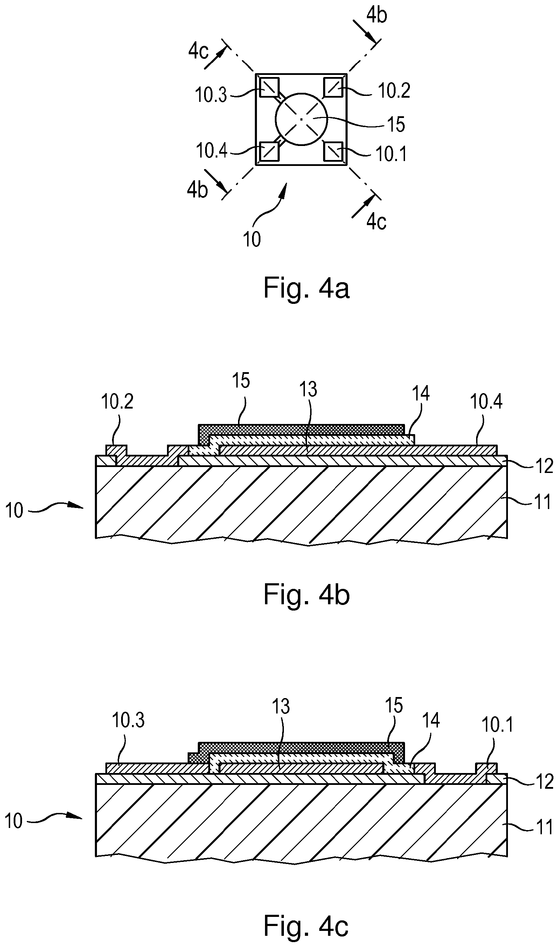

Ein konkretes Ausführungsbeispiel der erfindungsgemäßen Sensorvorrichtung 10 wird nachfolgend anhand der Figuren 2, 3 sowie 4a - 4c erläutert. Figur 2 zeigt hierbei eine perspektivische Ansicht der Sensorvorrichtung 10, Figur 3 eine Explosionsdarstellung der Sensorvorrichtung 10, Figur 4a eine Draufsicht auf die Sensorvorrichtung 10 und die Figuren 4b und 4c Schnittansichten entlang der in Figur 4a eingezeichneten Richtungen B und C.

Auf dem vorliegend quadratisch ausgebildeten Halbleiter-Trägersubstrat 11 aus dotiertem Silizium ist eine nahezu ganzflächige Passivierungsschicht 12 in Form von Siliziumdioxid aufgebracht. Auf der Passivierungsschicht 12 sind dann wiederum die restlichen Lagen bzw. Schichten der erfindungsgemäßen Sensorvorrichtung 10 in Übereinander-Anordnung vorgesehen. Typische Abmessungen des Halbleiter-Trägersubstrats 11 liegen im Bereich 2.3mm (Länge) x 2.3mm (Breite) x 0.725mm (Dicke). Im Fall der Verwendung eines 8"-Wafers können damit bis zu 5000 erfindungsgemäße Sensorvorrichtungen aus einem derartiger Wafer gefertigt werden.

Die erfindungsgemäß sowohl für die Messkapazität C_RH als auch für die Referenzkapazität C_REF in der Sensorvorrichtung 10 herangezogene Grundelektrode 13 ist im vorliegenden Ausführungsbeispiel - wie insbesondere aus Figur 3 ersichtlich - flächig in Form einer runden Kreisfläche mit ca. 1.4mm Durchmesser ausgebildet. Als Material ist für die Grundelektrode 13 in diesem Beispiel Gold mit einer darunter liegenden Haft- und Lötbarkeitsschicht aus Ni oder NiCr vorgesehen.

Ebenfalls flächig und kreisrund ist vorliegend auch die feuchtedurchlässige Deckelektrode 15 ausgebildet, die eine geeignete poröse oder rissige Struktur besitzt. Als Material für die Deckelektrode 15 dient in diesem Ausführungsbeispiel Chrom.

Der Kontaktierungsanschluss der Grundelektrode 13 ist in den Figuren mit 10.4 bezeichnet. Wie ebenfalls aus Figur 3 ersichtlich, ist dieser Kontaktierungsanschluss 10.4 wie auch die weiteren Kontaktierungsanschlüsse 10.1, 10.2 für das Halbleiter-Trägersubstrat 11 sowie der Kontaktierungsanschluss 10.3 für die Deckelektrode 15 jeweils planar ausgebildet. Nicht in den Figuren gezeigt ist eine zusätzliche Schicht bei den Kontaktierungsanschlüssen 10.1, 10.2 für das Halbleiter-Trägersubstrat 11, beispielsweise eine Aluminiumschicht, die unterhalb der Kontaktierungsanschlüsse 10.1, 10.2 vorgesehen ist und verhindert, dass der Übergang Metall-Silizium als Schottky-Diode wirkt. Die verschiedenen Kontaktierungsanschlüsse 10.1 - 10.4 können dabei wie in den Figuren gezeigt einen quadratischen Querschnitt aufweisen; alternativ ist aber auch ein runder Querschnitt der Kontaktierungsanschlüsse 10.1 - 10.4 möglich.

Gemäß Figur 4b ist der aus Gold bestehende Kontaktierungsanschluss 10.4 der Grundelektrode 13 unmittelbar seitlich benachbart zur Grundelektrode 13 in der gleichen Schichtebene auf der Passivierungsschicht 12 angeordnet. Ebenfalls auf der Passivierungsschicht 12 ist gemäß Figur 4c der Kontaktierungsanschluss 10.3 der Deckelektrode 15 platziert, jedoch räumlich separiert von der Grundelektrode 13. Wie aus Figur 3 ersichtlich, ist dieser Kontaktierungsanschluss 10.3 ebenfalls in der Grundelektrodenebene platziert, jedoch elektrisch isoliert von der Grundelektrode 13 und elektrisch leitend mit der darüber befindlichen Deckelektrode 15 verbunden.

Eine derartige Ausbildung der erfindungsgemäßen Sensorvorrichtung 10 erlaubt die Weiterverarbeitung ohne zusätzliches Gehäuse oder Packaging. Es ist beispielsweise möglich, die Sensorvorrichtung 10 über Flip-Chip-Verfahren weiterzuverarbeiten, indem diese automatisiert direkt über eine Ausnehmung auf einer Platine oder Leiterplatte gesetzt und mit Hilfe von Lotpaste über die Kontaktierungsanschlüsse 10.1 - 10.4 elektrisch kontaktiert wird. Über einen Underfiller zwischen Platine und Sensorvorrichtung können die Kontaktierungsanschlüsse 10.1 - 10.4 der Sensorvorrichtung 10 auf der Platine fixiert und vor mechanischer Beschädigung geschützt werden.

Selbstverständlich sind darüber hinaus auch noch weitere Montagevarianten in Verbindung mit der erfindungsgemäßen Sensorvorrichtung 10 realisierbar, in denen die Kontaktierung je nach Anordnung über Leitkleber, Bondverbindungen, Lötbumps etc. erfolgen könnte.

Wird zur Signalauswertung neben dem Messwert des kapazitiven Feuchtesensors noch ein Temperaturmesswert benötigt, so kann zur Temperaturerfassung als Temperatursensor ein kostengünstiger NTC-Temperatursensor verwendet werden. Dieser kann in geeigneter Art und Weise neben der erfindungsgemäßen Sensorvorrichtung auf einer Platine oder Leiterplatte verbaut werden.

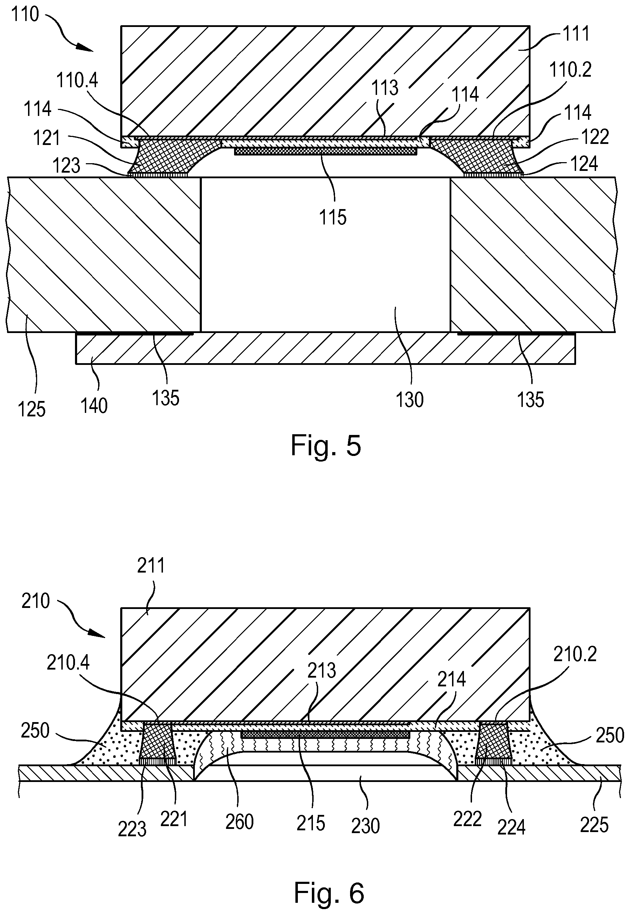

Anhand der Figuren 5 und 6 werden abschließend beispielhaft zwei Möglichkeiten veranschaulicht, wie mit Hilfe der erfindungsgemäßen Sensorvorrichtung jeweils eine Anordnung auf einem Trägersubstrat ausgebildet werden kann.

Eine erste Anordnung mit einer erfindungsgemäßen Sensorvorrichtung 110 ist in Figur 5 in einer Schnittansicht gezeigt. Wie aus dieser Figur ersichtlich, ist die Sensorvorrichtung 110 hier im Bereich einer kreisförmigen Ausnehmung 130 eines Trägersubstrats 125 angeordnet; die Ausnehmung 130 besitzt im vorliegenden Beispiel einen Durchmesser von ca. 2mm. Der auf dem Halbleiter-Trägersubstrat 111 wie vorstehend erläutert angeordnete Feuchtesensor mit Grundelektrode 113, feuchteempfindlichen Dielektrikum 114 und Deckelektrode 115 ist in Richtung der Ausnehmung 130 orientiert und oberhalb der Ausnehmung 130 angeordnet. Von den insgesamt vier Kontaktierungsanschlüssen sind in Figur 5 lediglich zwei Kontaktierungsanschlüsse 110.2, 110.4 erkennbar. Diese sind über elektrisch leitfähiges Verbindungsmaterial 121, 122 in Form von Lötzinn mit den entsprechenden Kontaktierungsbereichen 123, 124 auf dem Trägersubstrat 125 verbunden; als Material für die Kontaktierungsbereiche 123, 124 ist in diesem Ausführungsbeispiel Kupfer vorgesehen. Das Trägersubstrat 125 ist vorliegend als Leiterplatte aus FR4-Material ausgebildet und besitzt eine Dicke von etwa 1mm. Nicht gezeigt sind in der Figur elektrische Leiterbahnen im Trägersubstrat 125, über die die Sensorvorrichtung 110 mit - ebenfalls nicht gezeigten - weiteren Bauelementen verbunden ist.

Das leitfähige Verbindungsmaterial 121, 122 zwischen den Kontaktierungsanschlüssen 110.2, 110.4 der Sensorvorrichtung 110 und den Kontaktierungsbereichen 123, 124 des Trägersubstrats 125 ist in dieser Anordnungsvariante in Form sog. "wettable pads" ausgebildet. Dies bedeutet, dass eine automatische optische Sichtkontrolle der Lötverbindungen an dieser Stelle möglich ist. Schadhafte Lötverbindungen können auf diese Art und Weise im Produktionsprozess einfach identifiziert und die entsprechenden Einheiten aussortiert werden.

Auf derjenigen Seite des Trägersubstrats 125, die abgewandt zur Sensorvorrichtung orientiert ist, ist im Bereich der Ausnehmung 130 eine feuchtedurchlässige Membran 140 angeordnet. Diese kann beispielsweise aus Teflongeflecht ausgebildet sein und dient zum Schutz der Sensorvorrichtung 110 gegenüber Schmutz und Flüssigkeiten.

Als Besonders vorteilhaft ist bei der in Figur 5 gezeigten Anordnung desweiteren, dass eine gute Wärmeübertragung zwischen der Oberseite des Halbleiter-Trägersubstrats 111 und dem auf der gegenüberliegenden Seite angeordneten Feuchtesensor vorliegt. Über die Oberseite kann die Anordnung etwa auf zur Betauungserfassung einer Windschutzscheibe in einem Kraftfahrzeug angeordnet sein, beispielsweise aufgeklebt. Über die gute Wärmeankopplung kann dann der Feuchtesensor die Temperatur der Windschutzscheibe annehmen, womit direkt die Betauungstemperatur der Scheibe messbar ist, ohne dass hierfür ein separater Temperatursensor benötigt wird.

Eine zweite Anordnung mit einer erfindungsgemäßen Sensorvorrichtung 210 wird abschließend anhand der Schnittansicht in Figur 6 erläutert.

Wie im vorherigen Beispiel ist die Sensorvorrichtung 210 im Bereich einer kreisförmigen Ausnehmung 230 eines Trägersubstrats 225 angeordnet, wobei die Ausnehmung 230 wiederum einen Durchmesser von ca. 2mm aufweist. Im Unterschied zur vorherigen Anordnung ist das Trägersubstrat 225 nunmehr als sog. Flexplatine aus Polyimid-Material ausgebildet, die lediglich eine Dicke von ca. 50$\mu$m besitzt. Der auf dem Halbleiter-Trägersubstrat 211 angeordnete Feuchtesensor mit Grundelektrode 213, feuchteempfindlichem Dielektrikum 214 und Deckelektrode 215 ist wie vorher in Richtung der Ausnehmung 230 orientiert und oberhalb der Ausnehmung 230 angeordnet. Von den insgesamt vier Kontaktierungsanschlüssen sind im Beispiel der Figur 6 nur zwei Kontaktierungsanschlüsse 210.2, 210.4 erkennbar. Diese sind auch hier über elektrisch leitfähiges Verbindungsmaterial 221, 222 in Form von Lötzinn mit den entsprechenden Kontaktierungsbereichen 223, 224 auf dem Trägersubstrat 225 verbunden.

Im Unterschied zur vorher erläuterten Variante ist der Bereich um das Verbindungsmaterial zwischen der Sensorvorrichtung 210 und dem Trägersubstrat 225 nunmehr mit einem Underfiller-Material 250 ausgefüllt. Hierzu kann beispielsweise ein geeignetes Epoxidharz verwendet werden. Über das Underfiller-Material 250 wird die Sensorvorrichtung 210 mit dem Trägersubstrat 225 verklebt, wodurch zum einen eine mechanische Entlastung der Lötstellen bzw. im Bereich des Verbindungsmaterials 221, 222 resultiert. Zum anderen kann darüber die Ausnehmung 230 im Trägersubstrat 225 zur Seite mit den darauf angeordneten Bauteilen abgedichtet werden.

Als weiterer Unterschied zum vorhergehenden Ausführungsbeispiel ist zu erwähnen, dass die Ausnehmung 230 des Trägersubstrats 225 wie aus Figur 6 ersichtlich mit einem Beschichtungs-Material 260 gefüllt ist. Das Beschichtungs-Material 260 ermöglicht einerseits einen Gasaustausch zwischen dem Feuchtesensor der Sensorvorrichtung 210 und der Umgebung und hält andererseits aber Flüssigkeit vom Feuchtesensor. Auf diese Art und Weise wird verhindert, dass Schmutz und Wasser in flüssiger Form vom Feuchtesensor ferngehalten werden. Ferner werden darüber die metallischen Komponenten des Feuchtesensors vor eventuellen Ablagerungen und Korrosion geschützt.

Wird diese Anordnung zur Betauungserfassung einer Windschutzscheibe in einem Kraftfahrzeug vorgesehen, so lässt sich die Flexplatine zusammen mit der Sensorvorrichtung durch geeignetes Verbiegen direkt an die Scheibe andrücken; es resultiert wiederum ein guter Wärmeaustausch zwischen der Scheibe und der Sensorvorrichtung.

Neben den vorstehend beschriebenen Ausführungsbeispielen existieren im Rahmen der vorliegenden Erfindung selbstverständlich noch weitere Ausgestaltungsmöglichkeiten.

So können zum Aufbau von Anordnungen wie in den Beispielen der Figuren 5 und 6 selbstverständlich auch noch andere Träger-Substrate eingesetzt werden, die sich in Material und/oder Dicke von den oben erläuterten Varianten unterscheiden.

Ferner ist es möglich, dass die Grundelektrode mehrteilig ausgebildet ist. Im Fall einer zweiteiligen Grundelektrode kann diese etwa zwei konzentrisch zueinander angeordnete Grundelektroden-Teile aufweisen, nämlich einen zentralen kreisförmigen, ersten Grundelektroden-Teil und einen kreisringförmigen zweiten Grundelektroden-Teil, der den ersten Grundelektroden-Teil umschließt. Ferner wäre eine zweiteilige Ausbildung dergestalt möglich, dass ein erster und ein zweiter Grundelektroden-Teil jeweils kreissegmentförmig ausgebildet sind, wobei beide Kreissegmente eine kreisförmige Form der Grundelektrode ausbilden.

Im Fall derartiger, zweiteiliger Aufbauten der Grundelektrode können die Flächen der verschiedenen Grundelektroden-Teile sowie die Dicke der Passivierungsschicht und des feuchteempfindlichen Dielektrikums derart gewählt werden, dass ein bestimmtes Verhältnis zwischen der Messkapazität C_RH und den in diesem Fall mehreren Referenzkapazitäten C_REF1, C_REF2 resultiert. So bildet sich eine erste Referenzkapazität C_REF1 etwa zwischen dem ersten Grundelektroden-Teil und dem Halbleiter-Trägersubstrat aus und eine zweite Referenzkapazität C_REF2 zwischen dem zweiten Grundelektroden-Teil und dem Halbleiter-Trägersubstrat. Vorzugsweise werden für den Fall, dass der erste Grundelektroden-Teil eine kleinere Fläche besitzt als der zweite Grundelektroden-Teil die oben genannten Parameter so gewählt, dass folgende Beziehung gilt:

$$C\_REF1 < C\_RH < C\_REF2$$

Hierbei bezeichnet C_RH die Messkapazität, die den gesamten Feuchtebereich zwischen 0...100% RH zuzüglich eventueller variierender Dicken des Dielektrikums aufgrund von Prozessschwankungen umfasst.

**Patentansprüche**

1. Sensorvorrichtung (10) zur Feuchtemessung, bestehend aus einem elektrisch leitfähigen Halbleiter-Trägersubstrat (1; 11; 111; 211), mit

   - einem darauf angeordneten kapazitiven Feuchtesensor, der eine Grundelektrode (3; 13; 113; 213), eine feuchtedurchlässige Deckelektrode (5; 15; 115; 215) sowie ein zwischen Grund- und Deckelektrode (3, 13, 113, 213; 5, 15, 115, 215) angeordnetes, feuchteempfindliches Dielektrikum (4; 14; 114; 214) umfasst, sowie
   - mindestens einer darauf angeordneten Referenzkapazität (C_REF; C_REF1; C_REF2) zur Auswertung des Feuchtesensors,
   - wobei die Grundelektrode (3; 13; 113; 213) des kapazitiven Feuchtesensors desweiteren Bestandteil der mindestens einen Referenzkapazität (C_REF; C_REF1, C_REF2) ist,
   - wobei auf dem Halbleiter-Trägersubstrat (1; 11; 111; 211)

     • eine Passivierungsschicht (2; 12; 112; 212) angeordnet ist, auf der die Grundelektrode (3; 13; 113; 213) aufgebracht ist, und
     • mehrere Kontaktierungsanschlüsse (GE1; DE1; CR1; 10.1 - 10.4) zur Verbindung mit einer Feuchtemessungs-Schaltungsanordnung ausgeformt sind, insbesondere mindestens ein Kontaktierungsanschluss (DE1; 10.3) für die Deckelektrode (5; 15; 115; 215), mindestens ein Kontaktierungsanschluss (GE1; 10.4) für die Grundelektrode (3; 13; 113; 213) sowie mindestens ein Kontaktierungsanschluss (CR1; 10.1; 10.2) für das Halbleiter-Trägersubstrat (1; 11; 111; 211), und

   - wobei die Referenzkapazität (C_REF; C_REF1; C_REF2) die Grundelektrode (3; 13; 113; 213), das Halbleiter-Trägersubstrat (1; 11; 111; 211) sowie die Passivierungsschicht (2; 12; 112; 212) umfasst, und

   - wobei der Feuchtesensor und die Referenzkapazität (C_REF; C_REF1; C_REF2) übereinander angeordnet sind.

2. Sensorvorrichtung nach Anspruch 1, wobei die Passivierungsschicht (2; 12; 112; 212) aus einem oder mehreren der folgenden Materialien ausgebildet ist: Siliziumdioxid, Siliziumoxynitrid, Siliziumnitrid

3. Sensorvorrichtung nach mindestens einem der vorhergehenden Ansprüche, wobei die Grundelektrode (3; 13; 113; 213) flächig und aus elektrisch leitfähigem Material ausgebildet ist.

4. Sensorvorrichtung nach Anspruch 3, wobei die Grundelektrode (3; 13; 113; 213) aus Gold und einer darunter liegenden Haft- und Lötbarkeitsschicht ausgebildet ist.

5. Sensorvorrichtung nach mindestens einem der vorhergehenden Ansprüche, wobei die Deckelektrode (5; 15; 115; 215) flächig und aus elektrisch leitfähigem Material ausgebildet ist.

6. Sensorvorrichtung nach mindestens einem der vorhergehenden Ansprüche, wobei das Halbleiter-Trägersubstrat (1; 11; 111; 211) aus dotiertem Halbleitermaterial ausgebildet ist.

7. Sensorvorrichtung nach Anspruch 1, wobei die Kontaktierungsanschlüsse (GE1, DE1, CR1; 10.1 - 10.4) jeweils planar ausgebildet sind.

8. Sensorvorrichtung nach Anspruch 1, wobei die Kontaktierungsanschlüsse (GE1, DE1, CR1; 10.1 - 10.4) jeweils einen quadratischen oder runden Querschnitt aufweisen.

9. Sensorvorrichtung nach mindestens einem der vorhergehenden Ansprüche, wobei die Grundelektrode (3; 13; 113; 213) mehrteilig ausgebildet ist.

10. Anordnung mit einem Trägersubstrat (125; 225), das eine Ausnehmung (130; 230) aufweist, umfassend eine im Bereich der Ausnehmung (130; 230) angeordnete Sensorvorrichtung (110; 210) nach einem der vorhergehenden Ansprüche, wobei der Feuchtesensor in Richtung der Ausnehmung (130; 230) orientiert ist.

11. Anordnung nach Anspruch 10, wobei auf derjenigen Seite des Trägersubstrats (125), die abgewandt zur Sensorvorrichtung (110) orientiert ist, die Ausnehmung (130) mit einer feuchtedurchlässigen Membran (140) aus Teflongeflecht abgedeckt ist.

12. Anordnung nach Anspruch 10, wobei die Ausnehmung (230) im Trägersubstrat (225) mit einem Beschichtungs-Material (260) gefüllt ist, das einen Gasaustausch zwischen dem Feuchtesensor und der Umgebung ermöglicht, aber Flüssigkeit vom Feuchtesensor fernhält.

**Claims**

1. Sensor apparatus (10) for measuring moisture, consisting of an electrically conductive semiconductor carrier substrate (1; 11; 111; 211), having

    - a capacitive moisture sensor arranged thereon that comprises a base electrode (3; 13; 113; 213), a moisture-permeable top electrode (5; 15; 115; 215) and a moisture-sensitive dielectric (4; 14; 114; 214) arranged between the base and top electrodes (3, 13, 113, 213; 5, 15, 115, 215), and
    - at least one reference capacitance (C_REF; C_REF1; C_REF2) arranged thereon for evaluating the moisture sensor,
    - wherein the base electrode (3; 13; 113; 213) of the capacitive moisture sensor is furthermore part of the at least one reference capacitance (C_REF; C_REF1; C_REF2),
    - wherein on the semiconductor carrier substrate (1; 11; 111; 211)

    a passivation layer (2; 12; 112; 212) is arranged, to which the base electrode (3; 13; 113; 213) is applied, and multiple contact-connection terminals (GE1; DE1; CR1; 10.1 - 10.4) are formed for connection to a moisture measurement circuit arrangement, in particular at least one contact-connection terminal (DE1; 10.3) for the top electrode (5; 15; 115; 215), at least one contact-connection terminal (GE1; 10.4) for the base electrode (3; 13; 113; 213) and at least one contact-connection terminal (CR1; 10.1; 10.2) for the semiconductor carrier substrate (1; 11; 111; 211), and

    - wherein the reference capacitance (C_REF; C_REF1; C_REF2) comprises the base electrode (3; 13; 113; 213), the semiconductor carrier substrate (1; 11; 111; 211) and the passivation layer (2; 12; 112; 212), and
    - wherein the moisture sensor and the reference capacitance (C_REF; C_REF1; C_REF2) are arranged above one another.

2. Sensor apparatus according to Claim 1, wherein the passivation layer (2; 12; 112; 212) is produced from one or more of the following materials: silicon dioxide, silicon oxynitride, silicon nitride.

3. Sensor apparatus according to at least one of the preceding claims, wherein the base electrode (3; 13; 113; 213) is two-dimensional and produced from electrically conductive material.

4. Sensor apparatus according to Claim 3, wherein the base electrode (3; 13; 113; 213) is produced from gold and an underlying adhesive and solderable layer.

5. Sensor apparatus according to at least one of the preceding claims, wherein the top electrode (5; 15; 115; 215) is two-dimensional and produced from electrically conductive material.

6. Sensor apparatus according to at least one of the preceding claims, wherein the semiconductor carrier substrate (1; 11; 111; 211) is produced from doped semiconductor material.

7. Sensor apparatus according to Claim 1, wherein each of the contact-connection terminals (GE1, DE1, CR1; 10.1 - 10.4) is in planar form.

8. Sensor apparatus according to Claim 1, wherein each of the contact-connection terminals (GE1, DE1, CR1; 10.1 - 10.4) has a square or round cross section.

9. Sensor apparatus according to at least one of the preceding claims, wherein the base electrode (3; 13; 113; 213) is in multipartite form.

10. Arrangement having a carrier substrate (125; 225) that has a recess (130; 230), comprising a sensor apparatus (110; 210) according to one of the preceding claims arranged in the region of the recess (130; 230), the moisture sensor being oriented in the direction of the recess (130; 230).

11. Arrangement according to Claim 10, wherein the recess (130) is covered by a moisture-permeable diaphragm (140) made of Teflon mesh on that side of the carrier substrate (125) that is oriented to face away from the sensor apparatus (110).

12. Arrangement according to Claim 10, wherein the recess (230) in the carrier substrate (225) is filled with a coating material (260) that permits an exchange of gas between the moisture sensor and the surroundings but keeps liquid away from the moisture sensor.

**Revendications**

1. Dispositif capteur (10) destiné à mesurer l'humidité, comprenant un substrat porteur à semi-conducteur électriquement conducteur (1 ; 11 ; 111 ; 211), ledit dispositif incluant

- un capteur d'humidité capacitif disposé sur celui-ci et qui comporte une électrode de base (3 ; 13 ; 113 ; 213), une électrode de recouvrement (5 ; 15 ; 115 ; 215) perméable à l'humidité et un diélectrique (4 ; 14 ; 114 ; 214) sensible à l'humidité qui est disposé entre l'électrode de base et l'électrode de recouvrement (3, 13, 113, 213 ; 5, 15, 115, 215), ainsi que

- au moins une capacité de référence (C_REF ; C_REF1 ; C_REF2) disposée sur celui-ci et destinée à évaluer le capteur d'humidité,

- l'électrode de base (3 ; 13 ; 113 ; 213) du capteur d'humidité capacitif faisant également partie de l'au moins une capacité de référence (C_REF ; C_REF1, C_REF2),

- sur le substrat porteur à semi-conducteur (1 ; 11 ; 111 ; 211)

• étant disposée une couche de passivation (2 ; 12 ; 112 ; 212) sur laquelle est appliquée l'électrode de base (3 ; 13 ; 113 ; 213), et

• étant formées plusieurs bornes de contact (GE1 ; DE1 ; CR1 ; 10.1 - 10.4) destinées à être reliées à un circuit de mesure d'humidité, en particulier au moins une borne de contact (DE1; 10.3) destinée à l'électrode de recouvrement (5 ; 15 ; 115 ; 215), au moins une borne de contact (GE1; 10.4) destinée à l'électrode de base (3 ; 13 ; 113 ; 213) et au moins une borne de contact (CR1 ; 10.1 ; 10.2) destinée au substrat porteur à semi-conducteur (1 ; 11 ; 111 ; 211), et

- la capacité de référence (C_REF ; C_REF1 ; C_REF2) comprenant l'électrode de base (3 ; 13 ; 113 ; 213), le substrat porteur à semi-conducteur (1 ; 11 ; 111 ; 211) et la couche de passivation (2 ; 12 ; 112 ; 212), et

- le capteur d'humidité et la capacité de référence (C_REF ; C_REF1 ; C_REF2) étant disposés l'un au-dessus de l'autre.

2. Dispositif capteur selon la revendication 1, la couche de passivation (2 ; 12 ; 112 ; 212) étant formée à partir d'une ou plusieurs des matières suivantes : dioxyde de silicium, oxynitrure de silicium, nitrure de silicium.

3. Dispositif capteur selon l'une au moins des revendications précédentes, l'électrode de base (3 ; 13 ; 113 ; 213) étant sensiblement bidimensionnelle et étant formée à partir d'une matière électriquement conductrice.

4. Dispositif capteur selon la revendication 3, l'électrode de base (3 ; 13 ; 113 ; 213) étant formée d'or et d'une couche de promotion d'adhérence et de brasage sous-jacente.

5. Dispositif capteur selon l'une au moins des revendications précédentes, l'électrode de recouvrement (5 ; 15 ; 115 ; 215) étant sensiblement bidimensionnelle et formée à partir d'une matière électriquement conductrice.

6. Dispositif capteur selon l'une au moins des revendications précédentes, le substrat porteur à semiconducteur (1 ; 11 ; 111 ; 211) étant formé à partir d'une matière semi-conductrice dopée.

7. Dispositif capteur selon la revendication 1, les bornes de contact (GE1, DE1, CR1 ; 10.1 - 10.4) étant chacune conçues pour être planaires.

8. Dispositif capteur selon la revendication 1, les bornes de contact (GE1, DE1, CR1 ; 10.1 - 10.4) ayant chacune une section carrée ou ronde.

9. Dispositif capteur selon l'une au moins des revendications précédentes, l'électrode de base (3 ; 13 ; 113 ; 213) étant conçue en plusieurs parties.

10. Ensemble comprenant un substrat porteur (125 ; 225) qui comporte un évidement (130 ; 230), ledit ensemble comprenant un dispositif capteur (110 ; 210) selon l'une des revendications précédentes disposé dans la zone de l'évidement (130 ; 230), le capteur d'humidité étant orienté dans la direction de l'évidement (130 ; 230).

11. Ensemble selon la revendication 10, du côté du substrat porteur (125) qui est orienté à l'opposé du dispositif capteur (110), l'évidement (130) étant recouvert d'une membrane (140) en Téflon perméable à l'humidité.

12. Ensemble selon la revendication 10, l'évidement (230) dans le substrat porteur (225) étant rempli d'une matière de revêtement (260) qui permet l'échange de gaz entre le capteur d'humidité et l'environnement mais maintient le liquide à distance du capteur d'humidité.

Fig. 1a

Fig. 1b

Fig. 2

Fig. 3

Fig. 4a

Fig. 4b

Fig. 4c

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4277742 A
- DE 102006018563 A1
- US 20130139587 A1
- US 20150047430 A1
- WO 2010113711 A1
- EP 1574847 B1